# FASCICULE DE BREVET EUROPEEN

(11) **EP 3 579 964 B1**
(45) Date de publication et mention de la délivrance du brevet: **31.03.2021**
(21) Numéro de dépôt: 18705855.7
(22) Date de dépôt: 07.02.2018
(51) Int. Cl.: B01J 19/24, B01J 4/00, B01D 53/14, B01D 53/50, B01D 53/78

(54) **DISPOSITIF POUR LA PRODUCTION ET LE TRAITEMENT DE FLUX GAZEUX A TRAVERS UN VOLUME DE LIQUIDE REGULE AUTOMATIQUEMENT**
VORRICHTUNG ZUR ERZEUGUNG UND BEHANDLUNG EINES GASSTROMS DURCH EIN AUTOMATISCH GESTEUERTES FLÜSSIGKEITSVOLUMEN
DEVICE FOR PRODUCING AND TREATING A GAS STREAM THROUGH AN AUTOMATICALLY CONTROLLED VOLUME OF LIQUID

(30) Priorité: 10.02.2017 FR 1751104
(43) Date de publication de la demande: 18.12.2019
(73) Titulaire: Starklab, 59310 Nomain (FR)
(72) Inventeur: ZEMMOURI, Jaouad, 59310 Nomain (FR)
(74) Mandataire: Matkowska, Franck
(86) Numéro de dépôt international: PCT/EP2018/053021
(87) Numéro de publication internationale: WO 2018/146123

(56) Documents cités:
- WO-A1-2007/141366
- WO-A1-2010/016786
- WO-A2-2016/071648
- DE-A1-102013 205 123

## Description

### Domaine technique

La présente invention concerne la production et le traitement de flux gazeux à travers un volume de liquide avec mise en œuvre d'une régulation automatique du volume de liquide. Elle trouve son application dans des domaines variés tels que par exemple, et de manière non exhaustive, la récupération de calories dans un flux gazeux, et notamment dans un flux d'air chaud ou dans des fumées industrielles, la production d'un flux gazeux qui est chauffé ou refroidi en traversant ledit volume de liquide, la production d'un flux gazeux dont la température est contrôlée et/ou dont l'humidité absolue est contrôlée, l'humidification ou la déshumidification d'un flux gazeux, la dépollution ou le filtrage d'un flux gazeux, le traitement d'un flux gazeux par réaction chimique avec un liquide, le chauffage ou la climatisation d'un local ou de bâtiments industriels, tertiaires, ou domestiques, le contrôle de l'hygrométrie d'un local ou de bâtiments industriels, tertiaires, ou domestiques.

### Art antérieur

L'utilisation d'un liquide, tel que par exemple de l'eau, pour traiter, et notamment pour chauffer ou refroidir un flux gazeux par échange thermique entre le liquide et le flux gazeux, avec une mise en contact direct du flux gazeux et du liquide, est une technique ancienne, qui présente l'avantage d'être écologique, car elle évite notamment la mise en œuvre de fluides caloporteurs de type fluides frigorigènes. Le chauffage ou refroidissement du flux gazeux, et notamment d'un flux d'air peut par exemple avoir pour objectif de produire un flux gazeux ayant une température contrôlée et/ou avoir pour objectif de produire un flux gazeux ayant une humidité absolue contrôlée.

Une première solution connue pour mettre en œuvre cette technique consiste à faire passer le flux gazeux à travers un rideau de fines gouttelettes du liquide ou à travers une surface d'échange perméable au gaz et contenant ce liquide, tel que par exemple un matériau textile imbibé d'eau ou à faire circuler le flux gazeux au contact de plaques humidifiées. Le principal inconvénient de ce type de solution réside dans le très faible rendement énergétique de l'échange thermique entre le liquide et le flux gazeux, et dans les faibles débits d'air pouvant être obtenus.

Une deuxième solution connue consiste à faire passer le flux gazeux, et notamment le flux d'air directement à travers un volume de liquide contenu dans une enceinte d'échange, en injectant le flux d'air dans le volume de liquide, au-dessous de la surface dudit volume de liquide. Ce type de solution est décrit par exemple dans la demande de brevet internationale WO 2006/138287, et dans le brevet américain US 4 697 735 (figure 3). Ce type de solution est également décrit dans les demandes de brevet internationales WO 2015/086979 et WO2016/071648. Cette deuxième solution technique présente l'avantage de permettre d'atteindre un rendement énergétique des échanges thermiques entre le liquide et le flux gazeux plus élevé que la première solution technique.

Dans cette deuxième solution technique, l'échange entre le flux gazeux et le volume de liquide dépend de la hauteur de liquide traversé par le flux gazeux. Plus cette hauteur de liquide est importante et plus cet échange sera important. Par exemple, lorsque le liquide est utilisé pour chauffer ou refroidir un flux gazeux, plus la hauteur de liquide dans l'enceinte d'échange est importante et plus la quantité de calories échangée par unité de temps entre le flux gazeux et le liquide est importante. Lorsque le liquide est utilisé pour capter un composé dans le flux gazeux, plus la hauteur de liquide dans l'enceinte d'échange est importante et plus la quantité de ce composé capté par unité de temps dans le liquide est importante.

Dans certaines applications, la pression dans le flux gazeux à l'entrée de l'enceinte d'échange et/ou la pression dans le flux gazeux à la sortie enceinte d'échange peut varier de manière non contrôlée, ce qui provoque automatiquement une variation de la hauteur de liquide dans l'enceinte d'échange compensant cette variation de pression. Cette variation de la hauteur de liquide provoque un changement du point de fonctionnement du dispositif, l'échange entre le flux gazeux et le volume de liquide dans l'enceinte d'échange étant de manière préjudiciable modifié de manière non contrôlée.

Dans certaines applications, même si la pression dans le flux gazeux à l'entrée de l'enceinte d'échange et la pression du flux gazeux à la sortie enceinte d'échange sont constantes dans le temps, il peut s'avérer utile de de pouvoir faire varier le point de fonctionnement du dispositif, et de ce fait de pouvoir faire varier le niveau d'échange entre le flux gazeux et le volume de liquide, afin par exemple de le rendre optimal.

D'une manière plus générale, il existe un besoin de réguler automatiquement le point de fonctionnement d'un dispositif de production et de traitement d'un flux gazeux par passage à travers un volume de liquide contenu dans une enceinte d'échange.

### Objectif de l'invention

Un objectif de l'invention est de proposer une nouvelle solution technique, qui permet de produire un flux gazeux traité par passage dans un liquide contenu dans une enceinte d'échange et de réguler automatiquement le point de fonctionnement du dispositif.

### Résumé de l'invention

L'invention a ainsi pour objet un dispositif de production et de traitement d'un flux gazeux, lequel dispositif comporte une enceinte d'échange ayant au moins une première ouverture d'évacuation d'un flux gazeux, des moyens d'alimentation de l'enceinte avec un liquide de sorte que l'enceinte peut contenir un volume de ce liquide avec ladite première ouverture d'évacuation de l'enceinte d'échange positionnée au-dessus de la surface du volume de liquide contenu dans l'enceinte d'échange, des moyens d"évacuation du liquide contenu dans l'enceinte d'échange et des moyens aérauliques, qui sont aptes en fonctionnement à créer, par aspiration ou soufflage, un flux gazeux entrant en provenance de l'extérieur de l'enceinte d'échange, de telle sorte que ce flux gazeux entrant est introduit dans le volume de liquide contenu dans l'enceinte d'échange, au-dessous de la surface dudit volume de liquide, et qu'un flux gazeux sortant, traité par contact direct avec ledit volume de liquide remonte à l'intérieur de l'enceinte d'échange et est évacué en dehors de ladite enceinte d'échange en passant à travers l'ouverture d'évacuation de l'enceinte d'échange.

De manière caractéristique selon l'invention, le dispositif comporte en outre des premiers moyens de mesure d'un premier paramètre de fonctionnement (Xₒᵤₜ) mesuré dans le flux gazeux sortant ou des premiers moyens de mesure d'un premier paramètre de fonctionnement (Xₒᵤₜ) mesurant la concentration (CLₒᵤₜ) d'un composé dans le liquide contenu dans l'enceinte d'échange ou provenant de l'enceinte d'échange, ou mesurant le pH (pHₒᵤₜ) du liquide contenu dans l'enceinte d'échange ou provenant de l'enceinte d'échange, et des moyens électroniques de régulation aptes à commander automatiquement, notamment en cours de fonctionnement du dispositif, les moyens d'alimentation de l'enceinte d'échange et les moyens d'évacuation de l'enceinte d'échange de manière à réguler automatiquement la hauteur de liquide (ou autrement dit le niveau de liquide) dans l'enceinte d'échange en fonction au moins de ce premier paramètre de fonctionnement (Xₒᵤₜ).

Plus particulièrement, mais de manière facultative selon l'invention, le dispositif de l'invention peut comporter les caractéristiques techniques additionnelles et optionnelles ci-après, prises isolément ou en combinaison et définies dans l'une quelconque des revendications 2 à 15.

L'invention a également pour objet une utilisation d'au moins un dispositif susvisé pour produire au moins un flux gazeux qui a été traité par passage dans un volume de liquide contenu dans l'enceinte d'échange du dispositif.

Plus particulièrement l"invention a pour objet une utilisation d'au moins un dispositif susvisé pour le filtrage et/ou dépollution et/ou refroidissement et/ou chauffage d'un flux gazeux entrant.

Plus particulièrement l"invention a pour objet une utilisation d'au moins un dispositif susvisé pour le traitement d'un flux d'un flux gazeux entrant issu d'une combustion ou d'un flux gazeux entrant contenant des fumées industrielles, et notamment des fumées industrielles à haute température ou d'un flux gazeux contenant au moins l'un des composés sélectionnés parmi la liste suivante : Nox (Oxyde d'azote), COV (composé organique volatile), SOx (Oxyde de soufre), HAP (Hydrocarbure Aromatique polycyclique), CO, CO₂, NH₃, chloramine.

### Brève description des figures

Les caractéristiques et avantages de l'invention apparaîtront plus clairement à la lecture de la description détaillée ci-après de plusieurs variantes particulières de réalisation de l'invention, lesquelles variantes particulières de réalisation sont décrites à titre d'exemples non limitatifs et non exhaustifs de l'invention, et en référence aux dessins annexés sur lesquels :
- la figure 1 est une représentation schématique d'un premier dispositif conforme à l'invention ;
- la figure 2 est une représentation schématique d'un deuxième dispositif conforme à l'invention

### Description détaillée

Plusieurs exemples de dispositifs de production et de traitement d'un flux gazeux, conformes à l'invention vont être décrits en détails ci-après. Ces dispositifs peuvent être utilisés dans toutes les applications où il est utile de traiter un flux gazeux en le faisant passer dans un volume de liquide. Ces dispositifs peuvent ainsi être utilisés dans des domaines très variés tels que par exemple, et de manière non exhaustive, la récupération de calories dans un flux gazeux, et notamment dans un flux d'air chaud ou dans des fumées industrielles, la production d'un flux gazeux qui est chauffé ou refroidi en traversant ledit volume de liquide, la production d'un flux gazeux dont la température est contrôlée et/ou dont l'humidité absolue est contrôlée, l'humidification ou la déshumidification d'un flux gazeux, la dépollution ou le filtrage d'un flux gazeux, le traitement d'un flux gazeux par réaction(s) chimique(s) avec le liquide traversé par le flux gazeux, le chauffage ou la climatisation d'un local ou de bâtiments industriels, tertiaires, ou domestiques, le contrôle de l'hygrométrie d'un local ou de bâtiments industriels, tertiaires, ou domestiques. Le flux gazeux produit peut également être utilisé pour refroidir, chauffer, humidifier ou déshumidifier tout type d'objet ou de surface.

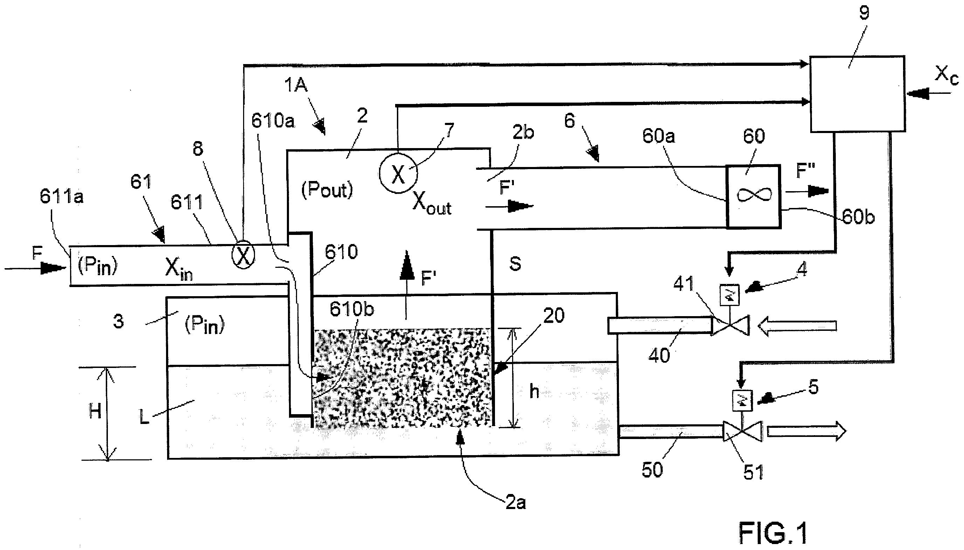

En référence à la variante particulière de réalisation de la figure 1, le dispositif 1A de production et de traitement d'un flux gazeux comporte une enceinte d'échange 2 et une réserve de liquide, sous la forme d'un bac 3 contenant un bain de liquide L, et par exemple de l'eau.

L'invention n'est pas limitée à la mise en œuvre d'eau comme liquide L, mais s'étend à tout autre type de liquide. A titre d'exemples non limitatifs et non exhaustifs, il peut être intéressant d'utiliser dans certaines applications un liquide L dont la température de solidification à la pression atmosphérique est inférieure à 0°C, tel que par exemple de l'eau contenant des additifs, de type sels, glucides, glycol, alcool. Il peut également être intéressant d'utiliser de l'huile comme liquide L.

Plus particulièrement, dans cette variante, de la figure 1, le bac 3 est fermé de manière étanche à l'air, de telle sorte que le bain de liquide L contenu dans le bac 3 est isolé de la pression externe à l'enceinte d'échange 2, et par exemple est isolé de la pression atmosphérique lorsque le dispositif 1A est à l'air libre.

Dans une autre variante, le bac 3 peut être ouvert de telle sorte que le volume de liquide à l'extérieur des enceintes d'échange 2 est par exemple à la pression atmosphérique.

La face inférieure de la partie basse 20 de chaque enceinte d'échange 2 est ouverte et forme ainsi une ouverture d'admission de liquide 2a. La partie basse 20 de chaque enceinte d'échange 2 est positionnée dans le bac 3, de telle sorte qu'en remplissant le bac 3 avec un niveau de liquide suffisant, la partie basse 20 de chaque enceinte d'échange 2 est plongée dans le bain de liquide contenu dans le bac 3, et la partie immergée de chaque enceinte d'échange 2 contient un volume V de liquide.

L'enceinte d'échange 2 comporte dans sa partie supérieure au moins une ouverture d'évacuation 2b d'un flux gazeux, qui est positionnée au-dessus du volume V de liquide contenu dans l'enceinte d'échange 2.

Pour l'alimentation du bac 3 en liquide neuf, le dispositif 1A comporte en outre des moyens 4 d'alimentation en liquide neuf comportant un conduit d'alimentation 40 en liquide qui débouche dans le bac 3, au-dessus du bain de liquide, et qui est équipé d'une vanne d'alimentation 41 permettant de contrôler l'alimentation du bac 3 en liquide neuf. Dans cette variante, le bac 3 et lesdits moyens d'alimentation 4 du bac 3 en liquide forment des moyens d'alimentation en liquide de l'enceinte d'échange 2.

Le dispositif 1A comporte en outre des moyens d'évacuation 5 comportant un conduit d'évacuation 50 qui communique en partie basse avec l'intérieur du bac 3, au-dessous de la surface du bain de liquide contenu dans le bac 3, et qui est équipé d'une vanne d'évacuation 51 permettant de contrôler l'évacuation du liquide en dehors du bac 3. Dans cette variante, le bac 3 et lesdits moyens d'évacuation 5 forment des moyens d'évacuation du liquide contenu dans l'enceinte d'échange 2.

Dans une autre variante de réalisation non représentée, et tel que décrit par exemple dans la demande de brevet internationale WO2015/086979, l'enceinte d'échange pourrait ne pas être immergée en partie basse dans un bac 3, mais pourrait être fermée en partie basse et être alimentée directement en liquide au moyen d'une canalisation sans mise en œuvre d'un bac 3.

Le dispositif 1A comporte également des moyens aérauliques 6, qui sont aptes en fonctionnement à créer un flux gazeux entrant F en provenance de l'extérieur de l'enceinte d'échange 2, de telle sorte que ce flux gazeux entrant F est introduit dans le volume de liquide V contenu dans l'enceinte d'échange 2, au-dessous de la surface S dudit volume de liquide, et qu'un flux gazeux F' sortant, traité par contact direct avec ledit volume de liquide remonte à l'intérieur de l'enceinte d'échange 2 et est évacué en dehors de ladite enceinte d'échange 2 en passant à travers l'ouverture d'évacuation 2b de l'enceinte d'échange 2.

Dans l'exemple particulier de la figure 1, les moyens aérauliques 6 sont aptes, en fonctionnement, à créer, par aspiration un flux gazeux entrant F en provenance de l'extérieur de l'enceinte d'échange 2. Dans une autre variante les moyens aérauliques 6 peuvent être aptes en fonctionnement à créer ce flux gazeux entrant F par soufflage.

Dans l'exemple particulier de la figure 1, ces moyens aérauliques 6 comportent un ventilateur 60, dont l'admission 60a est raccordée à l'ouverture d'évacuation 2b de l'enceinte d'échange 2.

Le ventilateur 60 peut être par exemple un ventilateur centrifuge ou tout type connu de compresseur de gaz, tel que par exemple un ventilateur axial, une pompe, etc....

Les moyens aérauliques 6 comportent également des moyens d'injection 61 permettant d'introduire le flux gazeux entrant F dans le volume de liquide V contenu dans l'enceinte d'échange 2, au-dessous de la surface S dudit volume de liquide.

Dans l'exemple particulier de la figure 1, ces moyens d'injection 61 comportent un conduit d'injection 610 vertical positionné à l'intérieur de l'enceinte d'échange 2, et comportant en partie supérieure une ouverture d'admission de flux gazeux 610a et en partie inférieure une ouverture d'évacuation flux gazeux 610b. L'ouverture d'amission 610a communique avec une canalisation d'admission de flux gazeux 611 positionnée à l'extérieur de l'enceinte d'échange 2. Cette canalisation d'admission comporte une ouverture d'admission de flux gazeux 611a.

Selon l'application, cette ouverture d'admission 611a peut par exemple déboucher à l'air libre ou peut être raccordée à un dispositif quelconque ou à une installation quelconque dans lequel le flux gazeux F est capté.

Lorsque l'on fait fonctionner le ventilateur 60, on met en dépression l'intérieur de l'enceinte d'échange 2. Lorsque le ventilateur 60 fonctionne, la pression dans le bac 3 à l'extérieur de l'enceinte d'échange 2 et au-dessus du bain de liquide L est égale à la pression Pin dans le flux gazeux entrant F à l'entrée du conduit d'injection 610, du fait de la fermeture étanche du bac 3. Cette pression Pin est supérieure à la pression Pout au-dessus du volume de liquide dans l'enceinte d'échange 2.

Cette différence de pression ΔP (ΔP = Pᵢₙ - Pₒᵤₜ) se traduit dans l'enceinte d'échange 2 (figure 4) par une remontée du niveau (Figure 1/ hauteur h) du liquide dans l'enceinte d'échange 2 et par une baisse du niveau de liquide (Figure 1/ hauteur H) dans le bac 3 à l'extérieur de l'enceinte d'échange 2.

Le volume de liquide V et le niveau h de liquide dans l'enceinte d'échange 2 dépendent de cette différence de pression ΔP.

Lorsque le ventilateur 60 fonctionne, il aspire un flux gazeux entrant F qui pénètre dans le conduit d'injection 610 de l'enceinte d'échange 2 par l'ouverture d'admission 610a de ce conduit 610. Ce flux gazeux entrant F (non traité) est introduit dans la partie non immergée du conduit d'injection 610, passe à travers l'ouverture d'évacuation 610b de la partie basse immergée du conduit d'injection 610 et est introduit dans le volume de liquide V contenu dans la partie basse immergée de l'enceinte 2, au-dessous de la surface S dudit volume de liquide. Un flux gazeux F' sortant, traité par contact direct avec ledit volume de liquide contenu dans l'enceinte d'échange 2 remonte à l'intérieur de l'enceinte d'échange 2, en dehors du conduit d'injection 610 et est évacué en dehors de ladite enceinte d'échange en passant à travers l'ouverture d'évacuation 2b de l'enceinte. Ce flux gazeux sortant F' est aspiré par le ventilateur 60 et est évacué sous la forme d'un flux gazeux F" (Figure 1).

En fonction de l'application, l'évacuation d'air 60b de ce ventilateur 60 peut par exemple déboucher à l'air libre ou peut être raccordée à une canalisation (non représentée) de telle sorte que le flux d'air F" est envoyé dans un autre dispositif ou dans une autre installation et n'est pas rejeté à l'air libre.

Lorsque la température du volume de liquide V dans l'enceinte 2 est différente de la température du flux gazeux F avant son introduction dans le volume V de liquide, il se produit entre le gaz et le liquide des échanges thermiques par chaleur sensible et chaleur latente.

Lorsque la température T_{Liquide} du volume de liquide est inférieure à la température initiale T_{Initiale} du flux de gaz F avant introduction dans le volume de liquide, le flux de gaz F' est refroidi. Plus particulièrement, la température du flux de gaz F' sortant a été diminuée et peut par exemple être sensiblement égale à la température T_{Liquide} du volume de liquide. Il en résulte concomitamment que le flux d'air de gaz F' sortant du dispositif 1A a été déshumidifié par rapport au flux de gaz entrant F, l'humidité absolue (poids d'eau par volume d'air) dans le flux de gaz F' sortant étant inférieure à l'humidité absolue du flux de gaz F entrant.

A l'inverse, lorsque la température du T_{Liquide} du volume de liquide est supérieure à la température initiale T_{Initiale}, le flux de gaz F' sortant est chauffé et peut par exemple être à une température sensiblement égale à la température T_{Liquide} du volume de liquide. Il en résulte concomitamment que le flux de gaz F' sortant du dispositif 1A a été humidifié par rapport au flux de gaz entrant F, l'humidité absolue (poids d'eau par volume d'air) dans le flux de gaz F' sortant étant supérieure à l'humidité absolue du flux de gaz F entrant.

Dans certaines applications, le dispositif 1A peut être utilisé pour filtrer ou dépolluer le flux de gaz entrant F par passage à travers un volume de liquide V. Le dispositif 1A peut également être utilisé pour condenser ou évaporer un ou plusieurs composés transportés par le flux de gaz entrant F, par passage à travers un volume de liquide V. En fonction de l'application, la température du volume de liquide peut être supérieure ou inférieure à la température du flux de gaz entrant F, ou être sensiblement égale à la température du flux de gaz entrant F. Lorsque la température du volume de liquide est sensiblement égale à la température du flux de gaz entrant F, on produit en sortie du dispositif 1A un flux de gaz sortant F', qui n'a pas été chauffé ou refroidi, mais qui est sensiblement à la même température que le flux de gaz entrant F.

Dans la variante de la figure 1, le ventilateur 60 permet de créer les flux gazeux F et F' par aspiration. Dans une autre variante, le ventilateur 60 pourrait être raccordé à l'ouverture admission 610a du conduit d'injection 610, de manière à créer ces flux gazeux F et F' par soufflage et non plus par aspiration.

En référence à la figure 1, le dispositif 1A comporte des premiers moyens de mesure 7 d'un premier paramètre de fonctionnement Xₒᵤₜ mesuré dans le flux gazeux sortant F', et dans le cas présent dans l'enceinte d'échange 2 au-dessus du volume de liquide L.

Le dispositif 1A comporte en outre des deuxièmes moyens de mesure 8 d'un deuxième paramètre de fonctionnement Xᵢₙ mesuré dans le flux gazeux entrant F', et dans le cas présent dans la canalisation d'admission 611 à proximité de l'ouverture d'admission 610a du conduit d'injection 610.

Le dispositif 1A comporte également des moyens électroniques de régulation 9 qui sont aptes en cours de fonctionnement du dispositif à commander automatiquement les moyens d'alimentation 4 et les moyens d'évacuation 5 de manière à réguler automatiquement la hauteur h de liquide (ou autrement dit le niveau de liquide) dans l'enceinte d'échange 2, d'une manière générale en fonction au moins de ce premier paramètre de fonctionnement Xₒᵤₜ et par exemple d'au moins une valeur de consigne Xc.

Plus particulièrement, les moyens électroniques de régulation 9 sont aptes à commander automatiquement les moyens d'alimentation 4 et les moyens d'évacuation 5 de manière à réguler automatiquement la hauteur h de liquide dans l'enceinte d'échange 2 en fonction également du deuxième paramètre de fonctionnement Xᵢₙ, et de préférence en fonction de la différence Xₒᵤₜ - Xᵢₙ (en valeur absolue ou en valeur algébrique)

Par exemple, lorsque Xₒᵤₜ est supérieur à X_{c}, ou lorsque la différence Xₒᵤₜ - Xᵢₙ (en valeur absolue) est supérieure à X_{C}, les moyens électroniques de régulation 9 commandent automatiquement les moyens d'alimentation 4 de manière à augmenter le niveau de liquide h dans l'enceinte d'échange 2. A l'inverse, lorsque Xₒᵤₜ est inférieur à X_{C}, ou lorsque la différence Xₒᵤₜ - Xᵢₙ (en valeur absolue) est inférieure à X_{C}, les moyens électroniques de régulation 9 commandent automatiquement les moyens d'évacuation 5 de manière à diminuer le niveau de liquide h dans l'enceinte d'échange 2.

Dans de nombreuses applications, la pression Pin dans le flux gazeux F à l'entrée de l'enceinte d'échange 2 et/ou la pression Pₒᵤₜ dans le flux gazeux F' à la sortie enceinte d'échange 2 peut varier de manière non contrôlée, ce qui en l'absence de moyens de régulation 9 provoque automatiquement une variation de la hauteur h de liquide dans l'enceinte d'échange 2 compensant cette variation de pression. Cette variation de la hauteur de liquide provoque un changement du point de fonctionnement du dispositif, l'échange entre le flux gazeux et le volume de liquide dans l'enceinte d'échange étant de manière préjudiciable modifié de manière non contrôlée. Dans certaines applications également, même si la pression Pᵢₙ dans le flux gazeux à l'entrée de l'enceinte d'échange 2 et la pression Pₒᵤₜ du flux gazeux à la sortie enceinte d'échange 2 sont constantes dans le temps, il peut s'avérer utile de pouvoir faire varier le point de fonctionnement du dispositif, et de ce fait de pouvoir faire varier le niveau d'échange entre le flux gazeux et le volume de liquide, afin par exemple de le rendre optimal.

Ainsi, dans une première variante de réalisation, le premier paramètre de fonctionnement Xₒᵤₜ peut être la pression Pₒᵤₜ (Xₒᵤₜ = Pₒᵤₜ) dans le flux gazeux traité F' et le deuxième paramètre de fonctionnement Xᵢₙ peut être la pression Pᵢₙ (Xᵢₙ = Pᵢₙ) dans le flux gazeux entrant F, les premiers 7 et deuxièmes 8 moyens de mesure étant par exemple des sondes Pitot.

En régulant automatiquement la hauteur h de liquide dans l'enceinte d'échange 2 en fonction de la pression Pₒᵤₜ, et plus particulièrement de la différence de pression Pₒᵤₜ - Pᵢₙ, on s'assure que le point de fonctionnement de l'installation, et donc la qualité de l'échange entre le flux d'air entrant F et le liquide dans l'enceinte 2, est toujours correct, indépendamment des pression Pin et Pout.

Dans une deuxième variante le premier paramètre de fonctionnement Xₒᵤₜ peut être la température Tₒᵤₜ (Xₒᵤₜ = Tₒᵤₜ) mesurée dans le flux gazeux traité F' et le deuxième paramètre de fonctionnement Xᵢₙ peut être la température Tᵢₙ (Xᵢₙ = Tᵢₙ) mesurée dans le flux gazeux entrant F, les premiers 7 et deuxièmes 8 moyens de mesure étant dans ce cas des sondes de température.

Dans une troisième variante le premier paramètre de fonctionnement Xₒᵤₜ peut être la concentration Cₒᵤₜ (Xₒᵤₜ = Cₒᵤₜ) d'un composant (chimique ou particulaire) mesurée dans le flux gazeux traité F' et le deuxième paramètre de fonctionnement Xᵢₙ peut être la concentration Cᵢₙ (Xᵢₙ = Cᵢₙ) de ce composant mesurée dans le flux gazeux entrant F, les premiers 7 et deuxièmes 8 moyens de mesure étant dans ce cas des sondes de détection de ce composant.

A titre d'exemple non limitatif et non exhaustif, dans le cas du traitement de flux gazeux constitués de fumées de combustion, notamment de fumées industrielles, le composant chimique peut être des oxydes d'azote (Nox), le volume de liquide dans l'enceinte d'échange étant utilisé pour capter ces oxydes d'azote. Dans d'autres applications, les composés chimiques captés dans le liquide peuvent de manière non limitative et non exhaustive être sélectionnées dans liste suivantes : COV (composés organiques volatiles), des SOx, HAP (Hydrocarbures Aromatiques polycycliques), CO, CO₂, NH₃, chloramines.

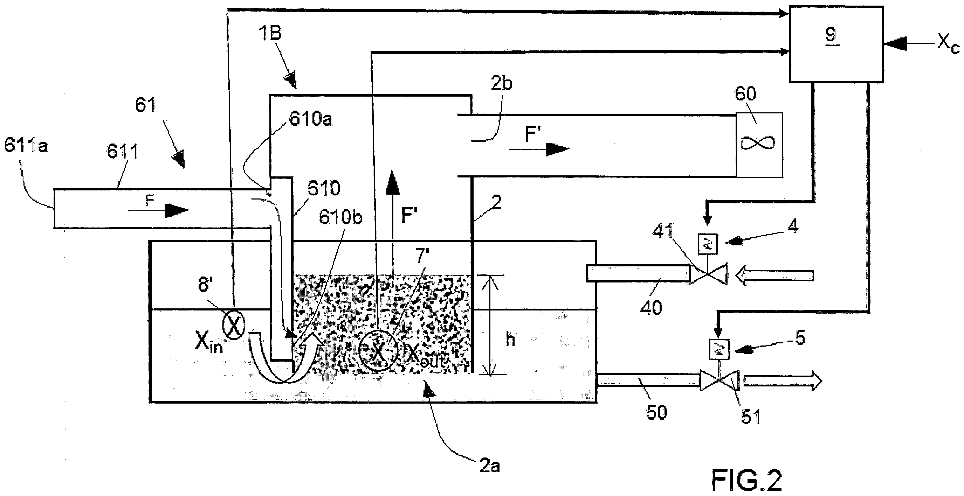

On a représenté sur la figure 2, un autre dispositif 1B de l'invention, qui se différencie du dispositif 1A de la figure 1 par la mise en œuvre :
- de premiers moyens de mesure 7' d'un premier paramètre de fonctionnement (Xₒᵤₜ) mesuré dans le liquide contenu dans l'enceinte d'échange 2
- de deuxièmes moyens de mesure 8' d'un deuxième paramètre de fonctionnement (Xᵢₙ) mesuré dans le liquide contenu dans le bac 3 à l'extérieur de l'enceinte d'échange 2.

Dans une autre variante, le premier paramètre de fonctionnement (Xₒᵤₜ) peut être mesuré dans le liquide provenant de l'enceinte d'échange 2.

Dans une autre variante, le deuxième paramètre de fonctionnement (Xᵢₙ) peut être mesuré dans le liquide neuf avant son introduction dans le bac 3, et donc avant son introduction dans l'enceinte d'échange 2, par exemple en étant mesuré dans le conduit d'alimentation 40 en amont ou en aval de la vanne 41.

Dans le cadre de l'invention, ce premier paramètre de fonctionnement (Xₒᵤₜ) peut être la concentration (CLₒᵤₜ) d'un composé dans le liquide contenu dans l'enceinte d'échange 2 et le deuxième paramètre peut être la concentration (CLᵢₙ) de ce composé dans le liquide en dehors de l'enceinte d'échange 2.

Dans le cadre de l'invention, ce premier paramètre de fonctionnement (Xₒᵤₜ) peut être le pH (pHₒᵤₜ) du liquide contenu dans l'enceinte d'échange 2 et le deuxième paramètre peut être le pH (pHᵢₙ) du liquide en dehors de l'enceinte d'échange 2, les premiers 7' et deuxièmes 8' moyens de mesure étant dans ce cas des sondes de mesure de pH.

Dans une variante perfectionnée de l'invention, en plus de la régulation de hauteur h de liquide dans l'enceinte d'échange 2, les moyens électroniques de régulation 9 peuvent également être conçus, et par exemple être programmés, pour commander automatiquement les vannes 41 et 51 de manière à permettre un renouvellement continu ou discontinu du liquide dans l'enceinte d'échange 2, de préférence en cours de fonctionnent du dispositif, en fonction d'un paramètre mesuré dans le liquide de l'enceinte d'échange 2 ou provenant de l'enceinte d'échange 2 et/ou d'un paramètre mesuré dans le liquide neuf avant son introduction dans l'enceinte d'échange 2, tel que par exemple le pH du liquide et/ou la concentration d'un composé dans le liquide et/ou la température du liquide et/ou en fonction d'un paramètre mesuré dans le flux gazeux entrant (F) et/ou d'un paramètre mesuré dans le flux gazeux sortant (F'), tel que notamment la température du flux gazeux ou la concentration d'un composant dans le flux gazeux.

## Revendications

1. Dispositif de production et de traitement d'un flux gazeux (F), lequel dispositif comporte une enceinte d'échange (2) ayant au moins une première ouverture d'évacuation (2b) d'un flux gazeux, des moyens (3 ; 4) d'alimentation de l'enceinte avec un liquide (L) de sorte que l'enceinte d'échange (2) peut contenir un volume (V) de ce liquide avec ladite première ouverture d'évacuation (2b) de l'enceinte d'échange positionnée au-dessus de la surface (S) du volume de liquide (V) contenu dans l'enceinte d'échange, des moyens (3 ; 5) d'évacuation du liquide (L) contenu dans l'enceinte d'échange (2) et des moyens aérauliques (6), qui sont aptes en fonctionnement à créer, par aspiration ou soufflage, un flux gazeux entrant (F) en provenance de l'extérieur de l'enceinte d'échange (2), de telle sorte que ce flux gazeux entrant (F) est introduit dans le volume de liquide (V) contenu dans l'enceinte d'échange (2), au-dessous de la surface (S) dudit volume de liquide, et qu'un flux gazeux (F') sortant, traité par contact direct avec ledit volume de liquide remonte à l'intérieur de l'enceinte d'échange et est évacué en dehors de ladite enceinte d'échange (2) en passant à travers l'ouverture d'évacuation (2b) de l'enceinte d'échange (2), **caractérisé en ce qu'**il comporte en outre des premiers moyens de mesure (7) d'un premier paramètre de fonctionnement (Xₒᵤₜ) mesuré dans le flux gazeux sortant (F') ou des premiers moyens de mesure (7') d'un premier paramètre de fonctionnement (Xₒᵤₜ) mesurant la concentration (CLₒᵤₜ) d'un composé dans le liquide contenu dans l'enceinte d'échange (2) ou provenant de l'enceinte d'échange (2), ou mesurant le pH (pHₒᵤₜ) du liquide contenu dans l'enceinte d'échange (2) ou provenant de l'enceinte d'échange (2), et **en ce qu'**il comporte des moyens électroniques de régulation (9) aptes à commander automatiquement les moyens (3 ; 4) d'alimentation de l'enceinte d'échange et les moyens d'évacuation (3 ; 5) de l'enceinte d'échange de manière à réguler automatiquement la hauteur (h) de liquide dans l'enceinte d'échange en fonction au moins de ce premier paramètre de fonctionnement (Xₒᵤₜ).

2. Dispositif selon la revendication 1, dans lequel le premier paramètre de fonctionnement (Xₒᵤₜ) est la pression (Pₒᵤₜ) mesurée dans l'enceinte d'échange (2) au-dessus du volume de liquide, ou est la température (Tₒᵤₜ) du flux gazeux sortant (F'), ou est la concentration (Cₒᵤₜ) d'un composant dans le flux gazeux sortant (F').

3. Dispositif selon l'une quelconque des revendications précédentes, comportant en outre des deuxièmes moyens de mesure (8 ; 8') d'un deuxième paramètre de fonctionnement (Xᵢₙ) en dehors du flux gazeux sortant (F'), et dans lequel les moyens électroniques de régulation (9) sont aptes à commander automatiquement les moyens (3 ; 4) d'alimentation de l'enceinte d'échange (2) et les moyens d'évacuation (3 ; 5) de l'enceinte d'échange (2) de manière à réguler automatiquement la hauteur (h) de liquide dans l'enceinte d'échange (2) en fonction également de ce deuxième paramètre de fonctionnement (Xᵢₙ).

4. Dispositif selon la revendication 3, dans lequel les deuxièmes moyens de mesure (8) sont aptes à mesurer ledit deuxième paramètre de fonctionnement (Xᵢₙ) dans le flux gazeux entrant (F).

5. Dispositif selon la revendication 4, dans lequel le deuxième paramètre de fonctionnement (Xᵢₙ) est la pression (Pᵢₙ) mesurée dans le flux gazeux entrant (F).

6. Dispositif selon la revendication 4, dans lequel le deuxième paramètre de fonctionnement (Xᵢₙ) est la température (Tᵢₙ) du flux gazeux entrant (F), ou est la concentration (Cᵢₙ) d'un composant dans le flux gazeux entrant (F).

7. Dispositif selon la revendication 3, dans lequel le deuxième paramètre de fonctionnement (Xᵢₙ) est la concentration (CLᵢₙ) d'un composé dans le liquide en dehors de l'enceinte d'échange (2).

8. Dispositif selon la revendication 3, dans lequel le deuxième paramètre de fonctionnement (Xᵢₙ) est le pH (pHᵢₙ) du liquide en dehors de l'enceinte d'échange (2), et plus particulièrement dans le liquide neuf avant son introduction dans l'enceinte d'échange (2).

9. Dispositif selon l'une quelconque des revendications 3 à 8, dans lequel les moyens électroniques de régulation (9) sont aptes à commander automatiquement les moyens (3 ; 4) d'alimentation de l'enceinte d'échange (2) et les moyens d'évacuation (3 ; 5) de l'enceinte d'échange (2) en fonction de la différence entre le premier paramètre de fonctionnement (Xₒᵤₜ) et le deuxième paramètre de fonctionnement (Xᵢₙ).

10. Dispositif selon l'une quelconque des revendications précédentes, dans lequel les moyens (3 ; 4) d'alimentation en liquide de l'enceinte d'échange (2) comportent une réserve (3) de liquide (L), et la partie basse de l'enceinte d'échange (2) comporte au moins une ouverture d'admission de liquide (2a) et est plongée dans la réserve (3) de liquide.

11. Dispositif selon la revendication 10, dans lequel la réserve (3) de liquide est fermée de manière étanche de telle sorte que la pression (Pᵢₙ) dans la réserve (3) au-dessus du liquide est égale à la pression dans le flux gazeux entrant (F).

12. Dispositif selon l'une quelconque des revendications précédentes, les moyens électroniques de régulation (9) sont aptes à commander automatiquement les moyens (3 ; 4) d'alimentation de l'enceinte d'échange et les moyens d'évacuation (3 ; 5) de l'enceinte d'échange de manière à permettre un renouvellement continu ou discontinu du liquide dans l'enceinte d'échange (2) en fonction d'un paramètre mesuré dans le liquide de l'enceinte d'échange (2) ou provenant de l'enceinte d'échange (2) et/ou d'un paramètre mesuré dans le liquide neuf avant son introduction dans l'enceinte d'échange (2), tel que par exemple le pH du liquide et/ou la concentration d'un composé dans le liquide et/ou la température du liquide, et/ou en fonction d'un paramètre mesuré dans le flux gazeux entrant (F) et/ou d'un paramètre mesuré dans le flux gazeux sortant (F'), tel que notamment la température du flux gazeux ou la concentration d'un composant dans le flux gazeux.

13. Utilisation d'au moins un dispositif visé à l'une quelconque des revendications précédentes pour produire au moins un flux gazeux (F') qui a été traité par passage d'un flux gazeux entrant (F) dans un volume de liquide contenu dans l'enceinte d'échange (2) du dispositif.

14. Utilisation selon la revendication 13 pour le filtrage et/ou dépollution et/ou refroidissement et/ou chauffage d'un flux gazeux entrant (F).

15. Utilisation selon l'une quelconque des revendications 13 ou 14 pour le traitement d'un flux d'un flux gazeux entrant (F) issu d'une combustion ou d'un flux gazeux entrant (F) contenant des fumées industrielles, et notamment des fumées industrielles à haute température ou d'un flux gazeux contenant au moins l'un des composés sélectionnés parmi la liste suivante : Nox (Oxyde d'azote), COV (composé organique volatile), SOx (Oxyde de soufre), HAP (Hydrocarbure Aromatique polycyclique), CO, CO₂, NH₃, chloramine.

## Patentansprüche

1. Vorrichtung zur Erzeugung und Behandlung eines Gasstroms (F), wobei die Vorrichtung umfasst: einen Austauschraum (2) mit mindestens einer ersten Öffnung (2b) zur Abgabe eines Gasstroms, Mittel (3; 4) zum Versorgen des Raums mit einer Flüssigkeit (L) derart, dass der Austauschraum (2) ein Volumen (V) der Flüssigkeit enthalten kann, wobei die erste Abgabeöffnung (2b) oberhalb der Oberfläche (S) des in dem Austauschraum enthaltenen Flüssigkeitsvolumens (V) positioniert ist, Mittel (3; 5) zur Abgabe der in dem Austauschraum enthaltenen Flüssigkeit (L), und aeraulische/lufttechnische Mittel (6), die im Betrieb in der Lage sind, durch Saugen oder Blasen einen von außerhalb des Austauschraums (2) eintretenden Gasstrom (F) derart zu erzeugen, dass dieser eintretende Gasstrom (F) in das in dem Austauschraum (2) enthaltene Flüssigkeitsvolumen (V) eingeleitet wird, unterhalb der Oberfläche (S) des Flüssigkeitsvolumens, und dass ein austretender Gasstrom (F'), der durch direkten Kontakt mit dem Flüssigkeitsvolumen behandelt wurde, innerhalb des Austauschraums aufsteigt und außerhalb des Austauschraums (2) abgeführt wird, indem er durch die Austrittsöffnung (2b) des Austauschraums (2) verläuft, **dadurch gekennzeichnet, dass** die Vorrichtung weiterhin erste Mittel (7) zum Messen eines ersten Betriebsparameters (Xₒᵤₜ), der in dem austretenden Gasstrom (F') gemessen wird, oder erste Mittel (7') zum Messen eines ersten Betriebsparameters (Xₒᵤₜ), welche die Konzentration (CLₒᵤₜ) einer Verbindung in der in dem Austauschraum (2) enthaltenen Flüssigkeit oder von dem Austauschraum (2) kommenden Flüssigkeit misst, oder den pH-Wert (pHₒᵤₜ) der in dem Austauschraum (2) enthaltenen oder von dem Austauschraum (2) kommenden Flüssigkeit misst, und dass sie elektronische Regelmittel (9) umfasst, die in der Lage sind, die Mittel (3; 4) zur Versorgung des Austauschraums und die Mittel (3; 5) zur Abgabe der Flüssigkeit aus dem Austauschraum automatisch zu steuern, um die Höhe (h) der Flüssigkeit in dem Austauschraum in Abhängigkeit von zumindest dem ersten Betriebsparameter (Xₒᵤₜ) automatisch zu regulieren.

2. Vorrichtung nach Anspruch 1, wobei der erste Betriebsparameter (Xₒᵤₜ) der in dem Austauschraum (2) oberhalb des Flüssigkeitsvolumens gemessene Druck (Pₒᵤₜ) ist, oder die Temperatur (Tₒᵤₜ) des austretenden Gasstroms (F') ist, oder die Konzentration (Cₒᵤₜ) einer Komponente in dem austretenden Gasstrom (F') ist.

3. Vorrichtung nach einem der vorhergehenden Ansprüche, die weiterhin zweite Mittel (8; 8') zum Messen eines zweiten Betriebsparameters (Xᵢₙ) außerhalb des austretenden Gasstroms (F) aufweist, bei der die elektronischen Regelmittel (9) in der Lage sind, die Mittel (3; 4) zum Versorgen des Austauschraums (2) und die Mittel (3; 5) zur Abgabe des Austauschraums (2) automatisch zu steuern, um die Höhe (h) der Flüssigkeit in dem Austauschraum (2) auch in Abhängigkeit von diesem zweiten Betriebsparameter (Xᵢₙ) automatisch zu regulieren.

4. Vorrichtung nach Anspruch 3, wobei die zweiten Mittel zum Messen (8) in der Lage sind, den zweiten Betriebsparameter (Xᵢₙ) in dem eintretenden Gasstrom (F) zu messen.

5. Vorrichtung nach Anspruch 4, wobei der zweite Betriebsparameter (Xᵢₙ) der in dem eintretenden Gasstrom (F) gemessene Druck (Pᵢₙ) ist.

6. Vorrichtung nach Anspruch 4, wobei der zweite Betriebsparameter (Xᵢₙ) die Temperatur (Tin) des eintretenden Gasstroms (F) oder die Konzentration (Cᵢₙ) einer Komponente in dem eintretenden Gasstrom (F) ist.

7. Vorrichtung nach Anspruch 3, wobei der zweite Betriebsparameter (Xᵢₙ) die Konzentration ((Lᵢₙ) einer Verbindung in der Flüssigkeit außerhalb des Austauschraums (2) ist.

8. Vorrichtung nach Anspruch 3, **dadurch gekennzeichnet, dass** der zweite Betriebsparameter (Xᵢₙ) der pH-Wert (pHᵢₙ) der Flüssigkeit außerhalb des Austauschraums (2) und insbesondere in der neuen Flüssigkeit vor deren Einführung in den Austauschraum (2) ist.

9. Vorrichtung nach einem der Ansprüche 3 bis 8, bei der die elektronischen Regelmittel (9) in der Lage sind, die Mittel (3; 4) zum Versorgen des Austauschraums (2) und die Mittel (3; 5) zur Abgabe des Austauschraums (2) in Abhängigkeit der Differenz zwischen dem ersten Betriebsparameter (Xₒᵤₜ) und dem zweiten Betriebsparameter (Xᵢₙ) automatisch zu steuern.

10. Vorrichtung nach einem der vorhergehenden Ansprüche, bei der die Mittel (3; 4) zum Versorgen des Austauschraums (2) mit Flüssigkeit ein Reservoir (3) für Flüssigkeit (L) umfassen, wobei der untere Teil des Austauschgehäuses (2) mindestens eine Flüssigkeitseintrittsöffnung (2a) aufweist und in die Flüssigkeitsreservoir (3) eingetaucht ist.

11. Vorrichtung nach Anspruch 10, wobei das Flüssigkeitsreservoir (3) derart abgedichtet ist, dass der Druck (Pᵢₙ) in dem Reservoir (3) oberhalb der Flüssigkeit gleich dem Druck in dem eintretenden Gasstrom (F) ist.

12. Vorrichtung nach einem der vorhergehenden Ansprüche, wobei die elektronischen Regelmittel (9) in der Lage sind, die Mittel (3; 4) zum Versorgen des Austauschraums und die Mittel (3; 5) zur Abgabe des Austauschraums derart automatisch zu steuern, dass eine kontinuierliche oder diskontinuierliche Erneuerung der Flüssigkeit in dem Austauschraum (2) in Abhängigkeit von einem in der Flüssigkeit in dem Austauschraum (2) enthaltenen oder von dem Austauschraum (2) kommenden Flüssigkeit gemessenen Parameters und/oder eines in der neuen Flüssigkeit vor deren Einführung in den Austauschraum (2) gemessenen Parameter zu ermöglichen, zum Beispiel den pH-Wert der Flüssigkeit und/oder die Konzentration einer Verbindung in der Flüssigkeit und/oder die Temperatur der Flüssigkeit, und/oder in Abhängigkeit eines Parameters, der in dem eintretenden Gasstrom (F) gemessen wird und/oder eines Parameters, der in dem austretenden Gasstrom (F') gemessen wird, zum Beispiel die Temperatur des Gasstroms oder die Konzentration einer Komponente in dem Gasstrom.

13. Verwendung mindestens einer Vorrichtung nach einem der vorhergehenden Ansprüche zur Erzeugung mindestens eines Gasstroms (F'), der durch Passieren eines eintretenden Gasstroms (F) durch ein Flüssigkeitsvolumen geleitet wurde, das in dem Austauschraum (2) der Vorrichtung enthalten ist, behandelt wurde.

14. Verwendung nach Anspruch 13 zum Filtern und/oder Reinigen und/oder Kühlen und/oder Heizen eines eintretenden Gasstroms (F).

15. Verwendung nach einem der Ansprüche 13 oder 14 zur Behandlung eines Stroms eines aus einer Verbrennung stammenden eintretenden Gasstroms (F) oder eines eintretenden Gasstroms (F), der Industriegase enthält, insbesondere Industriegase mit hoher Temperatur, oder eines Gasstrom, der mindestens eine der aus der folgenden Liste ausgewählten Verbindungen enthält: Nox (Stickstoffoxid), VOC (flüchtige organische Verbindung), SOx (Schwefeloxid), PAH (polycyclischer aromatischer Kohlenwasserstoff), CO, CO₂, NH3, Chloramin.

## Claims

1. Device for producing and treating a gas stream (F), which device comprises an exchange enclosure (2) having at least one first opening (2b) for discharging a gas stream, means (3; 4) for supplying the enclosure with a liquid (L) such that the exchange enclosure (2) can contain a volume (V) of this liquid with said first discharge opening (2b) of the exchange enclosure being positioned above the surface (S) of the volume of liquid (V) contained in the exchange enclosure, means (3; 5) for discharging the liquid (L) contained in the exchange enclosure (2) and aeraulic means (6), which are capable, during operation, of creating, by suction or blowing, an incoming gas stream (F) coming from the outside of the exchange enclosure (2), such that this incoming gas stream (F) is introduced into the volume of liquid (V) contained in the exchange enclosure (2), below the surface (S) of said volume of liquid, and such that an outgoing gas stream (F') treated by direct contact with said volume of liquid rises up inside the exchange enclosure and is discharged out of said exchange enclosure (2) by passing through the discharge opening (2b) of the exchange enclosure (2), **characterized in that** said device further comprises first means (7) for measuring a first operating parameter (Xₒᵤₜ) measured in the outgoing gas stream (F') or first means (7') for measuring a first operating parameter (Xₒᵤₜ) measuring the concentration (CLₒᵤₜ) of a compound in the liquid contained in the exchange enclosure (2) or coming from the exchange enclosure (2), or measuring the pH (pHₒᵤₜ) of the liquid contained in the exchange enclosure (2) or coming from the exchange enclosure (2), and **in that** said device comprises electronic control means (9) for automatically controlling the supply means (3; 4) of the exchange enclosure and the discharge means (3; 5) of the exchange enclosure so as to automatically adjust the height (h) of liquid in the exchange enclosure depending on at least this first operating parameter (Xₒᵤₜ).

2. Device according to claim 1, wherein the first operating parameter (Xₒᵤₜ) is the pressure (Pout) measured in the exchange enclosure (2) above the volume of liquid or is the temperature (Tₒᵤₜ) of the outgoing gas stream (F'), or is the concentration (Cₒᵤₜ) of a component in the outgoing gas stream (F').

3. Device according to any one of the preceding claims, further comprising second means (8; 8') for measuring a second operating parameter (Xᵢₙ) outside the outgoing gas stream (F'), and wherein the electronic control means (9) are capable of automatically controlling the supply means (3; 4) of the exchange enclosure (2) and the discharge means (3; 5) of the exchange enclosure (2) so as to automatically adjust the height (h) of liquid in the exchange enclosure (2) depending also on this second operating parameter (Xin).

4. Device according to claim 3, wherein the second measuring means (8) are capable of measuring said second operating parameter (Xᵢₙ) in the incoming gas stream (F).

5. Device according to claim 4, wherein the second operating parameter (Xᵢₙ) is the pressure (Pin) measured in the incoming gas stream (F).

6. Device according to claim 4, wherein the second operating parameter (Xᵢₙ) is the temperature (Tᵢₙ) of the incoming gas stream (F), or is the concentration (Cᵢₙ) of a component in the incoming gas stream (F).

7. Device according to claim 3, wherein the second operating parameter (Xᵢₙ) is the concentration (CLᵢₙ) of a compound in the liquid outside the exchange enclosure (2).

8. Device according to claim 3, wherein the second operating parameter (Xᵢₙ) is the pH (pHᵢₙ) of the liquid outside the exchange enclosure (2), and more particularly in the new liquid before its introduction into the exchange enclosure (2).

9. Device according to any one of claims 3 to 8, wherein the electronic control means (9) are capable of automatically controlling the supply means (3; 4) of the exchange enclosure (2) and the discharge means (3; 5) of the exchange enclosure (2) depending on the difference between the first operating parameter (Xₒᵤₜ) and the second operating parameter (Xᵢₙ).

10. Device according to any one of the preceding claims, wherein the liquid supply means (3; 4) of the exchange enclosure (2) comprise a supply (3) of liquid (L), and the bottom of the exchange enclosure (2) comprises at least one liquid intake opening (2a) and is submerged in the liquid supply (3).

11. Device according to claim 10, wherein the supply (3) of liquid is sealed such that the pressure (Pᵢₙ) in the supply (3) above the liquid is equal to the pressure in the incoming gas stream (F).

12. Device according to any one of the preceding claims, the electronic control means (9) are capable of automatically controlling the supply means (3; 4) of the exchange enclosure and the discharge means (3; 5) of the exchange enclosure so as to allow a continuous or discontinuous renewal of the liquid in the exchange enclosure (2) depending on a parameter measured in the liquid of the exchange enclosure (2) or coming from the exchange enclosure (2) and/or on a parameter measured in the new liquid before its introduction into the exchange enclosure (2), such as the pH of the liquid and/or the concentration of a compound in the liquid and/or the temperature of the liquid, and/or depending on a parameter measured in the incoming gas stream (F) and/or on a parameter measured in the outgoing gas stream (F'), such as in particular the temperature of the gas stream or the concentration of a component in the gas stream.

13. Use of at least one device according to any one of the preceding claims for producing at least one gas stream (F') which has been treated by passing an incoming gas stream (F) through a volume of liquid contained in the exchange enclosure (2) of the device.

14. Use according to claim 13 for filtering and/or cleaning up and/or cooling and/or heating an incoming gas stream (F).

15. Use according to either claim 13 or claim 14 for treating a stream of an incoming gas stream (F) resulting from combustion or an incoming gas stream (F) containing industrial fumes, and in particular high-temperature industrial fumes, or a gas stream containing at least one of the compounds selected from the following list: NOx (nitrogen oxide), VOC (volatile organic compound), SOx (sulfur oxide), PAH (polycyclic aromatic hydrocarbon), CO, CO₂, NH₃, and chloramine.
